# EUROPEAN PATENT APPLICATION

(11) **EP 1 510 802 A1**
(43) Date of publication of application: **02.03.2005**
(21) Application number: 04020146.9
(22) Date of filing: 25.08.2004
(51) Int. Cl.: G01L 1/20, B60N 2/00, B60R 21/01, H01H 3/14, G01G 19/414

(54) **Occupant classification on seat cushion with series connected pressure switches with respective parallel resistance**

(30) Priority: 27.08.2003 JP 2003302813
(71) Applicant: Aisin Seiki Kabushiki Kaisha, Kariya-shi, Aichi-ken 448-8650 (JP); FUJIKURA LTD., Koto-ku Tokyo (JP)
(72) Inventor: Maeda, Toshiro Aisin Seiki Kabushiki Kaisha, Kariya-shi Aichi-ken, 448-8650 (JP); Ito, Koji Aisin Seiki Kabushiki Kaisha, Kariya-shi Aichi-ken, 448-8650 (JP); Imai, Takayuki, Tokyo (JP)
(74) Representative: Kramer Barske Schmidtchen

(57) **Abstract**

An occupant classification device includes a pressure-sensitive sensor including a plurality of pressure-sensitive portions connected in series with each other and dispersedly arranged on a seat cushion, each pressure-sensitive portion being constituted by a parallel connection of a pressure-sensitive resistance and a fixed resistance, a resistance value of the pressure-sensitive resistance being variable in response to an applied pressure, and a determination portion for calculating a load applied to the seat cushion based on a resistance value obtained from the plurality of pressure-sensitive portions and determining a seated status of the seat cushion based on the calculated load.

## Description

### FIELD OF THE INVENTION

This invention generally relates to an occupant classification device for classifying an occupant on a seat such as a vehicle seat.

### BACKGROUND

A known occupant classification device is used for detecting a seated status of a seat, i.e. whether or not the occupant is on the seat, whether the occupant is a child or an adult, and the like. WO99/53283A1 and US5905209A each disclose an occupant classification device for detecting the seated status based on a resistance value of each pressure-sensitive resistance sequentially calculated by selecting a row and a column of a matrix constituted by a plurality of pressure-sensitive resistances that are dispersedly arranged on a seat cushion.

In addition, DE4237072C1 and WO97/10115A1 each disclose an occupant classification device including a plurality of pressure-sensitive resistances connected in parallel with each other and dispersedly arranged on the seat cushion. The seated status of the seat cushion is detected based on a calculated result of a. resistance value from all pressure-sensitive resistances connected in parallel with each other.

Further, EP0891898B1 discloses an occupant classification device including a plurality of pressure-sensitive switches connected in series with each other in each zone and dispersedly arranged on the seat cushion. The number of switches that is turned to ON status is evaluated based on a calculated result of a series resistance value of the pressure-sensitive switches in each zone. The seated status of the seat cushion is determined based on the number of pressure-sensitive switches operating at that time. In this case, the pressure-sensitive switch includes a high resistive layer whose both ends are connected to a pair of electrodes and a low resistive layer arranged above the high resistive layer with keeping a predetermined distance therebetween. When the low resistive layer is pressed down by the load applied and in contact with the high resistive layer, a resistance value between the pair of electrodes is changed from the high resistance state to the low resistance state.

According to the aforementioned each occupant classification device disclosed in WO99/53283A1 and US5905209A, a detection control structure such as a detection circuit and a control software for subsequently calculating the resistance value of each pressure-sensitive resistance by selecting the row and the column of the matrix may be complicated. For example, in case of obtaining the total load value on the seat cushion, the resistance value of each pressure-sensitive resistance is first measured and converted into the load value. Then, the load value 'data of all pressure-sensitive resistances should be added to the load value. In addition, the number of connecting portions between the pressure-sensitive sensor side and the detection circuit may be increased since each pressure-sensitive resistance is individually connected to the detection circuit, thereby causing the complicated structure and increase of a cost.

According to the aforementioned each occupant classification device disclosed in DE4237072C1 and WO97/10115A1, all pressure-sensitive resistances are connected in parallel with each other. Accordingly, the connecting portions between the pressure-sensitive sensor side and the detection circuit may be decreased. However, when the resistance value of a part of pressure-sensitive resistances becomes greatly smaller than that of the other pressure-sensitive resistances by the pressure applied, the resistance value of the parallel connection is determined based on that small resistance value. The resistance values of the other pressure-sensitive resistances are merely effective in the resistance value of the parallel connection. Then, the change in the resistance value relative to the change in the load (pressure) may be rapid and thus sufficient resolution may not be obtained for the load (pressure).

Further, according to the aforementioned occupant classification device disclosed in EP0891898B1, a resistance component of both ends of the high resistive layer may be included in the resistance value between the electrodes in addition to the resistance value of the low resistive layer when the pressure-sensitive switch is turned on due to the structure of the pressure-sensitive switch. Then, the resistance value of the pressure-sensitive switches operating at that time may not be measured accurately, thereby causing the wrong determination of the number of pressure-sensitive switches operating at that time.

Thus, a need exists for an occupant classification device including a decreased number of connecting portions between a pressure-sensitive sensor having a plurality of pressure-sensitive resistances and/or pressure-sensitive switches and a detection circuit, and a simple detection control structure for accurately and reliably detecting a seated status of a seat.

### SUMMARY OF THE INVENTION

According to an aspect of the present invention, an occupant classification device including a pressure-sensitive sensor having a plurality of pressure-sensitive portions connected in series with each other and dispersedly arranged on a seat cushion, and a determination portion for calculating a load applied to the seat cushion characterized in that each pressure-sensitive portion is constituted by a parallel connection of a pressure-sensitive resistance and a fixed resistance, a resistance value of the pressure-sensitive resistance being variable in response to an applied pressure, and the determination portion calculates the load applied to the seat cushion based on a resistance value obtained from the plurality of pressure-sensitive portions and determines a seated status of the seat cushion based on the calculated load.

According to the aforementioned invention, the information of the resistance value of the pressure-sensitive sensor in which the plurality of pressure-sensitive portions are connected in series with each other is input into the determination portion while output terminals of both ends of the plurality of pressure-sensitive portions as a whole are connected to a detection circuit of the determination portion side. Thus, the number of connecting portions between the pressure-sensitive sensor and the detection circuit may be decreased. At the same time, the detection circuit has a simple structure of only detecting the series resistance value of the plurality of pressure-sensitive portions, thereby avoiding employing a complicated circuit or a control software for selecting a row and a column of a matrix.

In addition, in case that the resistance value of the pressure-sensitive resistance of a part of the pressure-sensitive portions is greatly changed due to the load applied to the seat cushion, the resistance value from the parallel connection of the pressures-sensitive resistance and the fixed resistance of other pressure-sensitive portion whose resistance value is not greatly changed is added to the series resistance value of the plurality of pressure-sensitive portions. Thus, the series resistance value of the plurality of pressure-sensitive portions may change in response to the change of the resistance value of the pressure-sensitive portion whose resistance value is greatly changed. The load value applied to the seat cushion may be detected with a sufficient detection resolution accordingly. Further, the pressure-sensitive resistance of each pressure-sensitive portion is connected to the fixed resistance in parallel. Therefore, the pressure-sensitive portions arranged next to each other may be connected via the fixed resistance even if a wiring of one of the pressure-sensitive resistances is disconnected, thereby avoiding a situation in which the series resistance value of the plurality of pressure-sensitive portions cannot be detected and thus the load cannot be calculated due to the wiring disconnection of one pressure-sensitive resistance.

Accordingly, the occupant classification device that may accurately and reliably detect the seated status with sufficient detection resolution for the load value applied to the seat may be achieved with the simple detection control structure while decreasing the number of connecting portions between the pressure-sensitive sensor having the plurality of pressure-sensitive resistances and the detection circuit.

According to another aspect of the present invention, an occupant classification device including a pressure-sensitive sensor having a plurality of pressure-sensitive portions connected in series with each other and dispersedly arranged on a seat cushion, and a determination portion for calculating number of pressure-sensitive switches operating characterized in that each pressure-sensitive portion is constituted by a parallel connection of the pressure-sensitive switch and a fixed resistance, the pressure-sensitive switch being switched between a high resistance state and a low resistance state by an applied pressure, and the determination portion calculates the number of pressure-sensitive switches operating based on a resistance value obtained from the plurality of pressure-sensitive portions and determining a seated status of the seat cushion based on the calculated number of pressure-sensitive switches operating.

According to the aforementioned invention, the resistance value of the pressure-sensitive switch is changed from the high resistance state in which the resistance value is sufficiently higher than that of the fixed resistance to the low resistance state in which the resistance value is sufficiently lower than that of the fixed resistance, or from the low resistance state to the high resistant state inversely due to the load applied to the seat. When the pressure-sensitive switch of only a part of the pressure-sensitive portions is operated, the resistance value from the parallel connection of the pressure-sensitive switch and the fixed resistance not operating is added to the series resistance value of the plurality of pressure-sensitive portions. Thus, the series resistance value of the plurality of pressure-sensitive portions may be decreased in response to the number of pressure-sensitive switches operating at that time (in case that the pressure-sensitive switch is changed from the high resistance state to the low resistance state by the pressure applied) or increased in response to the number of pressure-sensitive switches operating at that time (in case that the pressure-sensitive switch is changed from the low resistance state to the high resistance state by the pressure applied). Then, the number of pressure-sensitive switches operating at that time may be determined based on the increase and decrease of the series resistance value.

In addition, the pressure-sensitive switch of each pressure-sensitive portion is connected to the fixed resistance in parallel. Therefore, the pressure-sensitive portions arranged next to each other may be connected by the fixed resistance even if a wiring of one of the pressure-sensitive switches of the pressure-sensitive portions is disconnected, thereby avoiding a situation in which the series resistance value of the plurality of pressure-sensitive portions cannot be detected and thus the operating number of pressure-sensitive switches cannot be calculated due to the wiring disconnection of the pressure-sensitive switch of one pressure-sensitive portion.

Accordingly, the occupant classification device that can accurately and reliably detect the seated status by accurately determining the operating number of pressure-sensitive switches may be achieved with the simple detection control structure while decreasing the number of connecting portions between the pressure-sensitive sensor having the plurality of pressure-sensitive switches and the detection circuit.

According to further another aspect of the present' invention, an occupant classification device including a first pressure-sensitive sensor having a plurality of pressure-sensitive portions connected in series with each other and dispersedly arranged on a seat cushion, and a determination portion for calculating a load applied to the seat cushion and number of pressure-sensitive switches operating characterized in that each first pressure-sensitive portion is constituted by a parallel connection of a pressure-sensitive resistance and a fixed resistance, a resistance value of the pressure-sensitive resistance being variable in response to an applied pressure, and the determination portion calculates a load applied to the seat cushion based on a resistance value obtained from the plurality of first pressure-sensitive portions and number of pressure-sensitive switches operating based on a resistance value obtained from the plurality of second pressure-sensitive portions, and determines a seated status of the seat cushion based on the calculated load and the calculated number of pressure-sensitive switches operating and in that the occupant classification device further comprises a second pressure-sensitive sensor including a plurality of second pressure-sensitive portions connected in series with each other and dispersedly arranged on the seat cushion, each second pressure-sensitive portion being constituted by a parallel connection of a pressure-sensitive switch and a fixed resistance, the pressure-sensitive switch being switched between a high resistance state and a low resistance state by an applied pressure.

According to the aforementioned invention, the occupant classification device includes the first pressure-sensitive sensor, which is the pressure-sensitive sensor in the first embodiment and the second pressure-sensitive sensor, which is the pressure-sensitive sensor in the second embodiment. Then, the seated status is determined based on the load applied to the seat cushion obtained by the series resistance value of the pressure-sensitive portions of the first pressure-sensitive sensor, and also the operating number of pressure-sensitive switches obtained by the series resistance value of the pressure-sensitive portions of the second pressure-sensitive sensor. As a result, the seated status may be further accurately determined based on both information of the load and the operating number of pressure-sensitive switches, as compared to a case in which the seated status is determined based on either one of the load applied to the seat and the operating number of pressure-sensitive switches.

Accordingly, the occupant classification device that can accurately and reliably detect the seated status with sufficient detection resolution for the load value applied to the seat. and by accurately determining the operating number of pressure-sensitive switches may be achieved with the simple detection control structure while decreasing the number of connecting portions between the pressure-sensitive sensor having the plurality of pressure-sensitive resistances and the pressure-sensitive switches, and the detection circuit.

### BRIEF DESCRIPTION OF THE DRAWINGS

The foregoing and additional features and characteristics of the present invention will become more apparent from the following detailed description considered with reference to the accompanying drawings, wherein:

Fig. 1 is a perspective view with a partial cross-sectional view of a seat cushion to which an occupant classification device is mounted according to the present invention;

Fig. 2 is a plane view of an overall structure of a pressure-sensitive sensor;

Fig. 3 is a schematic diagram showing an electrical structure of the occupant classification device according to a first embodiment of the present invention;

Fig. 4A is a plane view of a structure of a pressure-sensitive portion according to the first embodiment of the present invention;

Fig. 4B is a side cross-sectional view of the structure of the pressure sensitive portion according to the first embodiment of the present invention;

Fig. 5 is a flowchart of an occupant classification process according to the first embodiment of the present invention;

Fig. 6 is a graph showing a relationship between a total load and a resistance value of the pressure-sensitive sensor;

Fig. 7 is a graph showing a correlation between the total load and an operating number of pressure-sensitive switches, and a type of the occupant;

Fig. 8 is a schematic diagram of an electrical structure of an occupant classification device according to a second embodiment of the present invention;

Fig. 9A is a plane view of a structure of a pressure-sensitive portion according to the second embodiment of the present invention;

Fig. 9B is a side cross-sectional view of the structure of the pressure-sensitive portion according to the second embodiment of the present invention;

Fig. 10 is a flowchart of an occupant classification process according to the second embodiment of the present invention;

Fig. 11 is a graph showing a relationship between an operating number of pressure-sensitive switches and a resistance value of the pressure-sensitive sensor;

Fig. 12 is a schematic diagram of an electrical structure of an occupant classification device according to a third embodiment of the present invention;

Fig. 13 is a side cross-sectional view of a structure of a pressure-sensitive portion according to the third embodiment of the present invention; and

Fig. 14 is a flowchart of an occupant classification process according to the third embodiment of the present invention.

### DETAILED DESCRIPTION

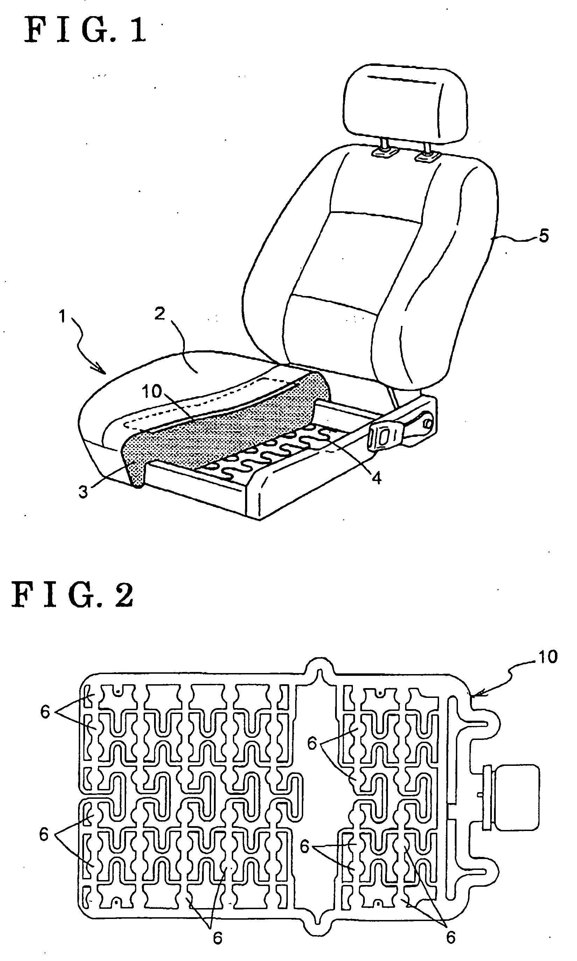

Embodiments of the present invention are explained referring to attached drawings. An occupant classification device of the present invention employed in a vehicle seat is explained in the following. Fig. 1 is a perspective view of a passenger seat of a vehicle. The seat includes a seat cushion 1 consisting of a seat surface 2, a cushion 3, a cushion support spring 4 and the like from top in order, and a seat back 5.

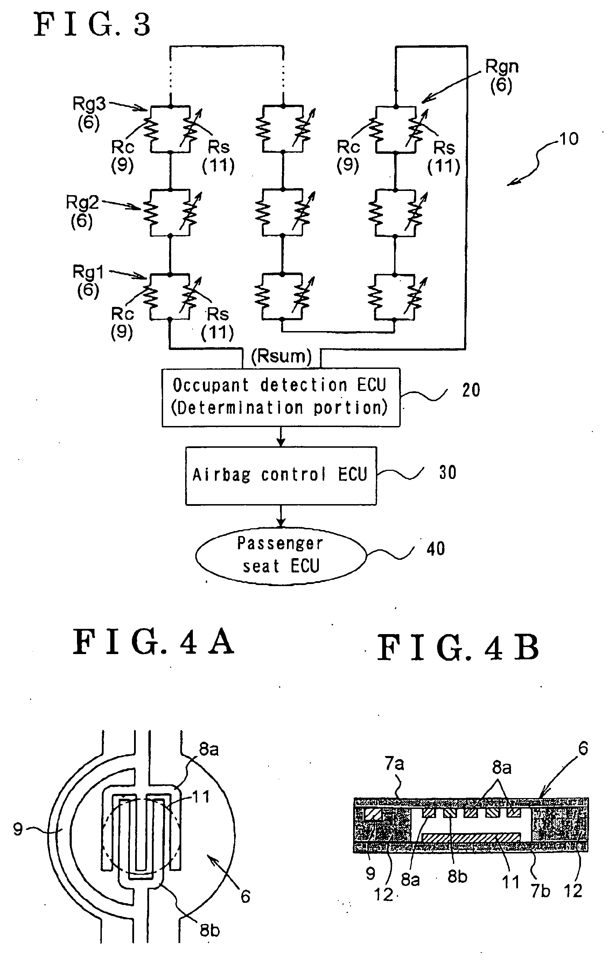

As shown in Figs. 2, 3A, and 3B, the occupant classification device according to a first embodiment includes a pressure-sensitive sensor 10 including a plurality of pressure-sensitive portions 6 connected in series with each other and dispersedly arranged on the seat cushion 1, and a determination portion 20 for determining the seated status, i.e. whether or not the occupant is on the seat, and whether the occupant is the child or the adult. Each pressure-sensitive portion 6 is constituted by a parallel connection of a pressure-sensitive resistance Rs whose resistance value is changed in response to a pressure applied and a fixed resistance Rc. The determination portion 20 calculates a load applied to the seat cushion 1 (hereinafter called "total load") based on a resistance value Rsum obtained from the plurality of pressure-sensitive portions 6 connected in series with each other in the pressure-sensitive sensor 10 and then determines the seated status of the seat cushion 1 based on the calculated load. The series resistance value Rsum of the plurality of pressure-sensitive portions 6 is obtained by a following calculation: Rsum=Rg1+Rg2+Rg3+...+Rgn. At this time, Rg1, Rg2, Rg3, ...Rgn each represents a resistance value Rg=RsRc/(Rs+Rc) by a parallel connection of the pressure-sensitive resistance Rs and the fixed resistance Rc in each pressure-sensitive portion 6.

The determination portion 20 is constituted by an occupant detection ECU 20 to which an output terminal of the pressure-sensitive sensor 10 is connected. The occupant detection information of the occupant detection ECU 20 is transmitted to an airbag control ECU 30, being used for controlling a passenger seat airbag 40.

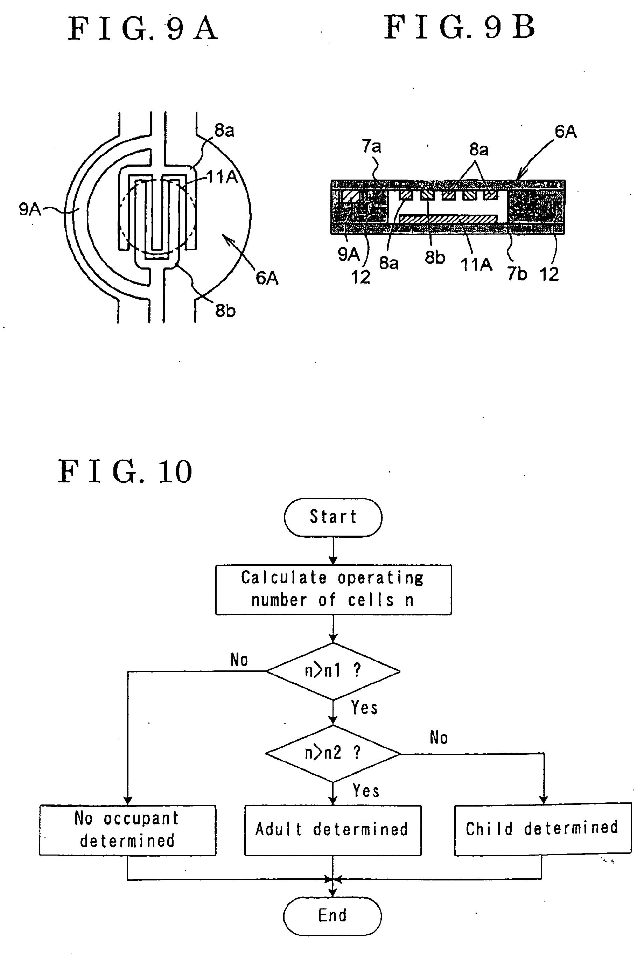

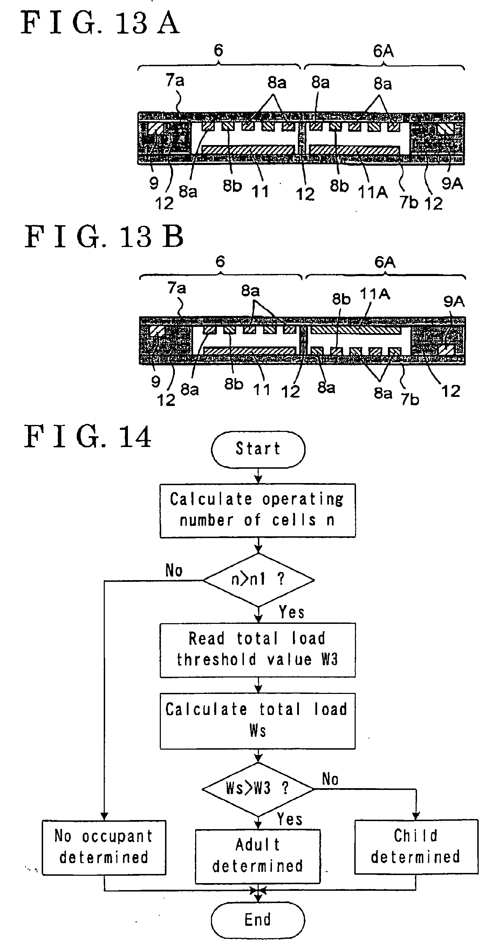

A detailed structure of each pressure-sensitive portion 6 of the pressure-sensitive sensor 10 is shown in Figs. 4A and 4B. A pair of flexible insulator films 7a and 7b to be placed on the seat cushion 1 faces each other with a small distance therebetween. Then, a pair of comb-shaped electrodes 8a and 8b with a predetermined distance therebetween in a direction of a plane of the insulator films 7a and 7b, serving as a pair of facing electrodes on a plane of the pressure-sensitive portion 6, are arranged on an inner face of one of the insulator films 7a and 7b, corresponding to a position of each pressure-sensitive portion 6 as in a plane view. At the same time, a resistive layer 9 constituting the fixed resistance Rc is formed on a side of a place where the pair of comb-shaped electrodes 8a and 8b are formed, connecting the electrodes 8a and 8b to each other. Further, a pressure-sensitive resistive layer 11 constituting the pressure-sensitive resistance Rs is formed on the inner face of the other one of the insulator films 7a and 7b, facing the pair of comb-shaped electrodes 8a and 8b. A resin layer 12 serves as a spacer for defining a predetermined distance between the insulator films 7a and 7b, and a joint member for connecting the films 7a and 7b with each other (same for Figs. 9 and 13). At this time, a known resistive ink having a predetermined resistance is used for the resistive layer 9 while a known pressure-sensitive ink whose resistance value is decreased when pressure is applied is used for the pressure-sensitive resistive layer 11.

The pressure-sensitive sensor 10 having the aforementioned structure is mounted to the seat cushion 1. Precisely, the pressure-sensitive sensor 10 is arranged between the seat surface 2 and the cushion 3, inside of the cushion 3, between the cushion 3 and the cushion support spring 4, or the like. In Fig. 1, the pressure-sensitive sensor 10 is arranged on an upper portion of the cushion 3.

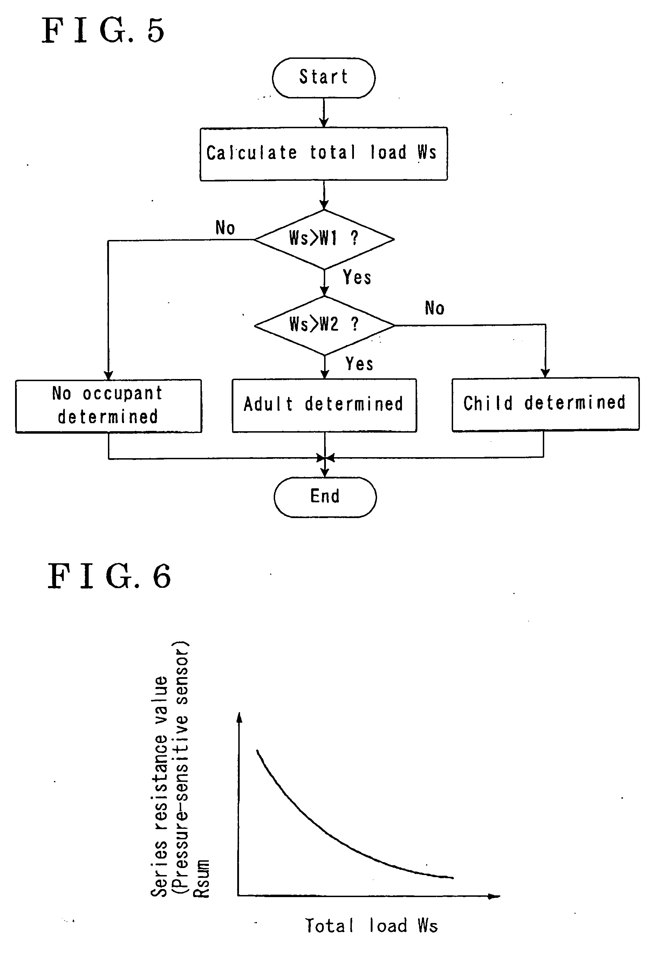

An occupant detection process performed by the occupant detection ECU 20 (determination portion 20) is explained referring to Figs. 5, 6 and 7. First, a total load Ws applied to the seat cushion 1 is calculated based on the series resistance value Rsum of the plurality of pressure-sensitive portions 6. In this case, a relationship between the series resistance value Rsum of the pressure-sensitive portions 6 and the total load Ws is obtained beforehand by an experiment. That is, as shown in Fig. 6, the series resistance value Rsum is decreased in a quadratic curve along with the increase of the total load Ws. For example, the series resistance value Rsum (adult) obtained when the adult is on the seat is smaller than the series resistance value Rsum (child) obtained when the child is on the seat.

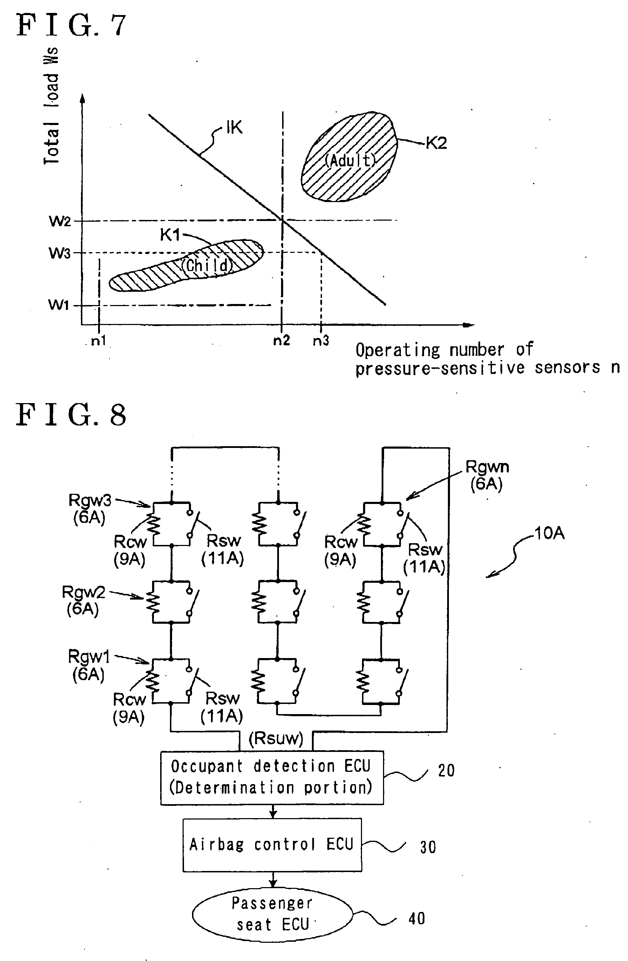

Next, the calculated total load Ws is compared with a first threshold value W1 and a second threshold value W2. The first threshold value W1 is set between zero load value and a load value obtained in case of the child seating. The second threshold value W2 is set between the load value obtained in case of the child seating and a load value obtained in case of the adult seating. At this time, W1 is smaller than W2 (see Fig. 7).

Fig. 7 is an experimental data showing a correlated distribution between the total load Ws obtained from the series resistance value Rsum of the pressure-sensitive portions 6 and an operating number n of pressure-sensitive switches to be mentioned later in a second embodiment, when the child and the adult are each on the seat cushion 1. A distribution area for the child seating is represented as K1 while a distribution area for the adult seating is represented as K2.

When the total load Ws is smaller than the first threshold value 1, it is determined that no occupants are on the seat. When the total load Ws is between the first threshold value W1 and the second threshold value W2, it is determined that the child is on the seat. When the total load Ws is greater than the second threshold value W2, it is determined that the adult is on the seat.

The second embodiment is explained in the following. The second embodiment differs in the structure of the pressure-sensitive sensor 10 and the occupant detection structure of the determination portion 20 from the first embodiment. The differences are explained as follows.

As shown in Figs. 2 and 8, the occupant classification device according to the second embodiment includes a pressure-sensitive sensor 10A including a plurality of pressure-sensitive portions 6A connected in series with each other and dispersedly arranged on the seat cushion 1, and the determination portion 20 (occupant detection ECU 20) for determining the seated status, i.e. whether or not the occupant is on the seat, and whether the occupant is the child or the adult. Each pressure-sensitive portion 6A is constituted by a parallel connection of a pressure-sensitive switch Rsw that can be switched between a high resistance state and a low resistance state, and a fixed resistance Rcw. The determination portion 20 calculates the number of pressure-sensitive switches Rsw operating at that time based on a resistance value Rsuw obtained from the plurality of pressure-sensitive portions 6A connected in series with each other in the pressure-sensitive sensor 10A and then determines the seated status of the seat cushion 1 based on the calculated number of pressure-sensitive switches Rsw operating at that time. The series resistance value Rsuw of the plurality of pressure-sensitive portions 6A is obtained by a following calculation: Rsuw=Rgw1+Rgw2+Rgw3+...+Rgwn. At this time, Rgw1, Rgw2, Rgw3, ...Rgwn each represents a resistance value Rgw=RswRcw/(Rsw+Rcw) by a parallel connection of the pressure-sensitive switch Rsw and the fixed resistance Rcw in each pressure-sensitive portion 6A.

A detailed structure of each pressure-sensitive portion 6A of the pressure-sensitive sensor 10A is shown in Figs. 9A and 9B. The pair of flexible insulator films 7a and 7b to be placed on the seat cushion 1 faces each other with a small distance therebetween: Then, the pair of comb-shaped electrodes 8a and 8b with a predetermined distance therebetween in a direction of a plane of the insulator films 7a and 7b, serving as a pair of facing electrodes on a plane of the pressure-sensitive portion 6A, are arranged on an inner face of one of the insulator films 7a and 7b, corresponding to a position of each pressure-sensitive portion 6A as in a plane view. At the same time, a resistive layer 9A constituting the fixed resistance Rcw is formed on a side of a place where the pair of comb-shaped electrodes 8a and 8b are formed, connecting the electrodes 8a and 8b to each other. Further, a low resistive layer 11A constituting the pressure-sensitive switch Rsw in the low resistance state is formed on the inner face of the other one of the insulator films 7a and 7b, facing the pair of comb-shaped electrodes 8a and 8b. At this time, the known resistive ink having a predetermined resistance is used for the resistive layer 9A while the known pressure-sensitive ink whose resistance value is decreased when pressure is applied is used for the low resistive layer 11A.

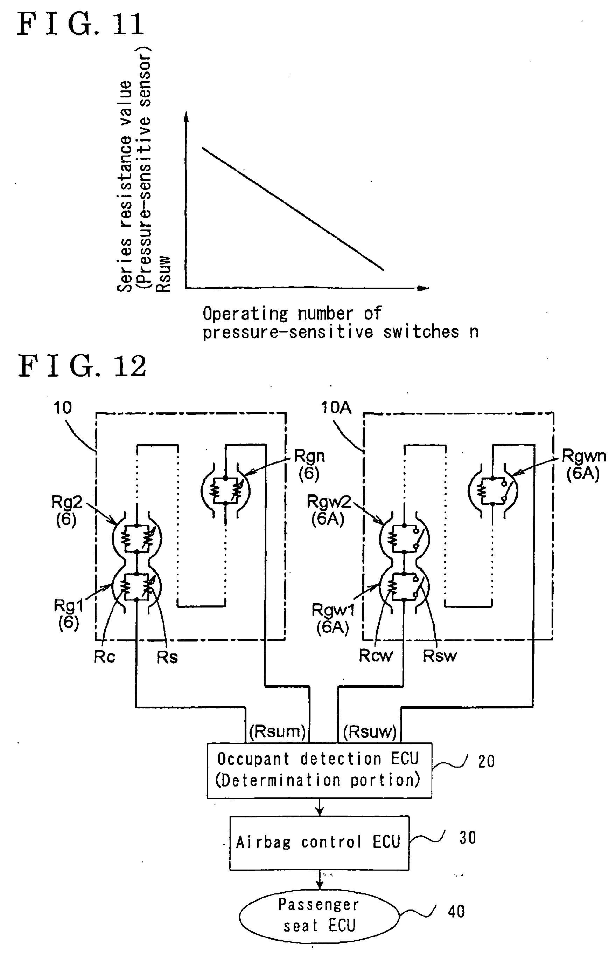

The occupant detection process performed by the occupant detection ECU 20 (determination portion 20) is explained referring to Figs. 10, 11 and 7. First, the operating number n of the pressure-sensitive switches Rsw is calculated based on the series resistance value Rsuw of the plurality of pressure-sensitive portions 6A. In this case, a relationship between the series resistance value Rsuw of the pressure-sensitive portions 6A and the operation number n of the pressure-sensitive switches Rsw is obtained beforehand by an experiment. That is, as shown in Fig. 11, the series resistance value Rsuw is linearly decreased along with the increase of the operating number n of the pressure-sensitive switches Rsw. The operating number n of the pressure-sensitive switches Rsw is hereinafter called an operating number of cells n.

Next, the operating number of cells n is compared with a first threshold value n1 and a second threshold value n2. The first threshold value n1 is set between zero load value and a load value obtained in case of the child seating. The second threshold value n2 is set between the load value obtained in case of the child seating and a load value obtained in case of the adult seating. At this time, n1 is smaller than n2 (see Fig. 7).

When the operating number of cells n is smaller than the first threshold value n1, it is determined that no occupants are on the seat. When the operating number of cells n is between the first threshold value n1 and the second threshold value n2, it is determined that the child is on the seat. When the operating number of cells n is greater than the second threshold value n2, it is determined that the adult is on the seat.

A third embodiment is explained in the following. According to the third embodiment, the occupant classification device includes a first pressure-sensitive sensor 10, which is the pressure-sensitive sensor 10 in the first embodiment, and a second pressure-sensitive sensor 10A, which is the pressure-sensitive sensor 10A in the second embodiment. In addition, the structure of the determination portion 20 in the third embodiment is different from that of the first embodiment. The rest of the structure in the third embodiment is same as that of the first embodiment. The differences are explained as follows.

As shown in Fig. 12, the occupant classification device according to the third embodiment includes the first pressure-sensitive sensor 10 including a plurality of first pressure-sensitive portions 6 connected in series with each other and dispersedly arranged on the seat cushion 1, being dispersed thereon, the second pressure-sensitive sensor 10A including a plurality of second pressure-sensitive portions 6A connected in series with each other and dispersedly arranged on the seat cushion 1, and the determination portion 20 (occupant detection ECU 20) for determining the seated status, i.e. whether or not the occupant is on the seat, and whether the occupant is the child or the adult. Each first pressure-sensitive portion 6 is constituted by a parallel connection of the pressure-sensitive resistance Rs whose resistance value is changed in response to a pressure applied and a first fixed resistance Rc. Each second pressure-sensitive portion 6A is constituted by a parallel connection of the pressure-sensitive switch Rsw that can be switched between a high resistance state and a low resistance state, and a second fixed resistance Rcw. The determination portion 20 calculates a load applied to the seat cushion 1 (i.e. "total load") based on the resistance value Rsum obtained from the plurality of first pressure-sensitive portions 6 connected in series with each other in the first pressure-sensitive sensor 10, and the number of pressure-sensitive switches Rsw operating at that time based on the resistance value Rsuw obtained from the plurality of second pressure-sensitive portions 6A connected in series with each other in the second pressure-sensitive sensor 10A, and then determines the seated status of the seat cushion 1 based on the calculated load and the calculated number of pressure-sensitive switches Rsw operating at that time.

The detailed structures of each first pressure-sensitive portion 6 of the first pressure-sensitive sensor 10 and each second pressure-sensitive portion 6A of the second pressure-sensitive sensor 10A are shown in Fig 13. The pair of flexible insulator films 7a and 7b to be placed on the seat cushion 1 faces each other with a small distance therebetween. Then, a pair of first comb-shaped electrodes 8a and 8b with a predetermined distance therebetween in a direction of a plane of the insulator films 7a and 7b, serving as a pair of first facing electrodes on a plane of the first pressure-sensitive portion 6, are arranged on an inner face of one of the insulator films 7a and 7b, corresponding to a position of each first pressure-sensitive portion 6 as in a plane view. At the same time, the resistive layer 9 constituting the first fixed resistance Rc is formed on a side of a place where the pair of first comb-shaped electrodes 8a and 8b are formed, connecting the first electrodes 8a and 8b to each other. Further, the pressure-sensitive resistive layer 11 constituting the pressure-sensitive resistance Rs is formed on the inner face of the other one of the insulator films 7a and 7b, facing the pair of first comb-shaped electrodes 8a and 8b. In addition, a pair of second comb-shaped electrodes 8a and 8b with a predetermined distance therebetween in a direction of a plane of the insulator films 7a and 7b, serving as a pair of second facing electrodes on a plane of the second pressure-sensitive portion 6A, are arranged on an inner face of one of the insulator films 7a and 7b, corresponding to a position of each second pressure-sensitive portion 6A as in a plane view. At the same time, the resistive layer 9A constituting the second fixed resistance Rcw is formed on a side of a place where the pair of second comb-shaped electrodes 8a and 8b are formed, connecting the second electrodes 8a and 8b to each other. Further, the low resistive layer 11A constituting the pressure-sensitive switch Rsw in the low resistance state is formed on the inner face of the other one of the insulator films 7a and 7b, facing the pair of second comb-shaped electrodes 8a and 8b.

In Fig. 13A, the resistive layer 9 and the pair of first comb-shaped electrodes 8a and 8b of the first pressure-sensitive portion 6, and the resistive layer 9A and the pair of second comb-shaped electrodes 8a and 8b of the second pressure-sensitive portion 6A are formed on the inner face of the identical insulator film 7a out of the two insulator films 7a and 7b. Meanwhile, the pressure-sensitive resistive layer 11 of the first pressure-sensitive portion 6 and the low resistive layer 11A of the second pressure-sensitive portion 6A are formed on the inner face of the identical insulator film 7b out of the two insulator films 7a and 7b. In Fig. 13B, the resistive layer 9 and the first comb-shaped electrodes 8a and 8b of the first pressure-sensitive portion 6 are formed on the inner face of the different insulator film from the one on which the resistive layer 9A and the second comb-shaped electrodes 8a and 8b of the second pressure-sensitive portion 6A are formed. Further, the pressure-sensitive resistive layer 11 of the first pressure-sensitive portion 6 is formed on the inner face of the different insulator film from the one on which the low resistive layer 11A of the second pressure-sensitive portion 6A is formed.

The occupant detection process performed by the occupant detection ECU 20 (determination portion 20) is explained referring to Figs. 14 and 7. First, the operating number n (operating number of cells) of the pressure-sensitive switches Rsw is calculated based on the series resistance value Rsuw of the plurality of second pressure-sensitive portions 6A (see Fig. 11). Then, the operating number of cells n is compared with the first threshold value n1.

When the operating number of cells n is smaller than the first threshold value n1, it is determined that no occupants are on the seat. When the operating number of cells n is greater than the first threshold value n1, a threshold value W3 for the total load is read in. As shown in Fig. 7, data of the distribution area K1 for the load value Ws and the operating number of cells n in case of the child seating and the distribution area K2 for the load value Ws and the operating number of cells n in case of the adult seating are collected beforehand by an experiment. Then, a threshold line IK is set, being positioned in the middle of the distribution areas K1 and K2. The calculated value of the operating number of cells n (for example, n3) is substituted to the threshold line for obtaining the threshold value W3.

Next, the total load value Ws applied to the seat cushion 1 is calculated based on the series resistance value Rsum of the plurality of first pressure-sensitive portions 6 in the first pressure-sensitive sensor 10 (see Fig. 6). The calculated total load Ws is compared to the aforementioned threshold value W3. When the total load value Ws is smaller than the threshold value W3, it is determined that the child is on the seat. When the total load value Ws is greater than the threshold value W3, it is determined that the adult is on the seat.

According to the aforementioned third embodiment, the first pressure-sensitive portions 6 are all into one group and connected in series with each other in the first pressure-sensitive sensor 10. In addition, the second pressure-sensitive portions 6A are all into one group and connected in series with each other in the second pressure-sensitive sensor 10A. However, instead, the plurality of first pressure-sensitive portions 6 may be divided into a plurality of groups so as to be connected in series with each other in each group. In the same way, the plurality of second pressure-sensitive portions 6A may be divided into a plurality of groups so as to be connected in series with each other in each group. In this case, the determination portion 20 determines the total load Ws or the operating number n of the pressure-sensitive switches based on the respective series resistance values of the pressure-sensitive portions 6 and 6A per group.

In addition, according to the aforementioned embodiments, the pair of facing electrodes (comb-shaped electrodes) 8a and 8b to which the fixed resistive layer 9 or 9A is connected are formed on the inner face of one of the insulator films 7a and 7b. Then, the pressure-sensitive resistive layer 11 or the low resistive layer 11A of the pressure-sensitive switch is formed on the inner face of the other one of the insulator films 7a and 7b so as to face the comb-shaped electrodes 8a and 8b. However, instead, the pair of comb-shaped electrodes 8a and 8b, the fixed resistive layer 9 or 9A, and the pressure-sensitive resistive layer 11 or the low resistive layer 11A of the pressure-sensitive switch may be formed on the inner face of the identical insulator film under the condition that the fixed resistive layer 9 or 9A, and the pressure-sensitive resistive layer 11 or the low resistive layer 11A of the pressure-sensitive switch is connected to the pair of electrodes 8a and 8b.

Further, according to the aforementioned embodiments, the facing electrodes 8a and 8b are each formed by the comb-shaped electrode. However, the electrodes 8a and 8b are not limited in the comb-like shape and various shapes of the electrode may be employed.

Furthermore, according to the first and third embodiment, the resistance value of the pressure-sensitive resistance Rs is decreased along with the increase of the pressure. However, the pressure-sensitive resistance Rs may be increased along with the increase of the pressure.

Furthermore, according to the second and third embodiments, the pressure-sensitive switch Rsw is switched from the high resistance state to the low resistance state when the pressure is applied. However, instead, the pressure-sensitive switch Rsw may be switched from the low resistance state to the high resistance state when the pressure is applied.

Furthermore, according to the aforementioned embodiments, the occupant classification device is' employed in the vehicle seat. However, instead, the occupant classification device may be employed in various kinds of seats.

Furthermore, according to the aforementioned first embodiment, in case that no load is applied to the pair of insulator films 7a and 7b arranged on the seat cushion 1, the pair of electrodes 8a and 8b formed on the inner face of one of the insulator films 7a and 7b are not in contact with the pressure-sensitive resistive layer 11 formed on the inner face of the other one of the insulator films 7a and 7b, keeping a small distance therefrom. Therefore, the resistance value between the pair of electrodes 8a and 8b is obtained by the resistance value of the resistive layer 9 constituting the fixed resistance formed on the inner face of the insulator film where the pair of electrodes 8a and 8ab are formed. The resistance value of the aforementioned fixed resistance is equal to the resistance value of each pressure-sensitive portion 6. Meanwhile, when the load is applied to the pair of insulator films 7a and 7b, each pressure-sensitive portion 6 corresponding to a portion of the insulator films 7a and 7b as in a plane view to which the load is applied is bent. Then, the pair of electrodes 8a and 8b formed on the inner face of one of the insulator films 7a and 7b become in contact with the pressure-sensitive resistive layer 11 formed on the inner face of the other one of the pair of insulator films 7a and 7b. The resistance value between the pair of electrodes 8a and 8b is obtained by the resistance value from the parallel connection of the resistance value of the pressure-sensitive resistive layer 11 that is changed in response to the load applied to the insulator films 7a and 7b, and the resistance value of the resistive layer 9 constituting the fixed resistance. The resistance value of the aforementioned parallel connection is equal to the resistance value of each pressure-sensitive portion 6.

Accordingly, the laminated fixed resistance for which a general-purpose resistive ink and the like is used may be formed with a predetermined resistance value on the inner face of one of the insulator films 7a and 7b in a state of being in connection with the pair of electrodes 8a and 8b. At the same time, the laminated pressure-sensitive resistance for which a general-purpose pressure-sensitive ink and the like is used may be formed with a predetermined characteristic on the inner face of the other one of the insulator films 7a and 7b. Further, the plurality of pressure-sensitive portions 6 are formed between the pair of insulator films 7a and 7b facing each other, thereby avoiding the water from entering and achieving a simple handling.

Furthermore, according to the aforementioned second embodiment, in case that no load is applied to the pair of insulator films 7a and 7b arranged on the seat cushion 1, the pair of electrodes 8a and 8b formed on the inner face of one of the insulator films 7a and 7b are not in contact with the low resistive layer 11A formed on the inner face of the other one of the insulator films 7a and 7b, keeping a small distance therefrom. Therefore, the resistance value between the pair of electrodes 8a and 8b is obtained by the resistance value of the resistive layer 9A constituting the fixed resistance formed on the inner face of the insulator film where the pair of electrodes 8a and 8ab are formed. The resistance value of the aforementioned fixed resistance is equal to the resistance value of each pressure-sensitive portion 6A. Meanwhile, when the load is applied to the pair of insulator films 7a and 7b, each pressure-sensitive portion 6A corresponding to a portion of the insulator films 7a and 7b as in a plane view to which the load is applied is bent. Then, the pair of electrodes 8a and 8b formed on the inner face of one of the insulator films 7a and 7b become in contact with the low resistive layer 11A constituting the pressure-sensitive switch in the low resistance state formed on the inner face of the other one of the pair of insulator films 7a and 7b. The resistance between the pair of electrodes 8a and 8b is obtained by the resistance value from the parallel connection of the resistance value of the low resistive layer 11A constituting the pressure-sensitive switch in the low resistance state, and the resistance value of the resistive layer 9A constituting the fixed resistance. The resistance value of the aforementioned parallel connection is equal to the resistance value of each pressure-sensitive portion 6A.

Accordingly, the laminated fixed resistance for which a general-purpose resistive ink and the like is used may be formed with a predetermined resistance value on the inner face of one of the insulator films 7a and 7b in a state of being in connection with the pair of electrodes 8a and 8b. At the same time, the laminated pressure-sensitive switch with the low resistance value for which a general-purpose low resistive ink and the like is used may be formed on the inner face of the other one of the insulator films 7a and 7b. In addition, the low resistive layer 11A has a switch structure of contacting with or separating from the pair of electrodes 8a and 8b, thereby accurately switching between the high resistance state in which the pressure-sensitive switch is not operated and the low resistance state in which the pressure-sensitive switch is operated. Further, the plurality of pressure-sensitive portions 6A are formed between the pair of insulator films 7a and 7b facing each other, thereby avoiding the water from entering and achieving a simple handling.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An occupant classification device comprising a pressure-sensitive sensor (10) including a plurality of pressure-sensitive portions (6) connected in series with each other and dispersedly arranged on a seat cushion (1), and a determination portion (20) for calculating a load applied to the seat cushion **characterized in that** each pressure-sensitive portion is constituted by a parallel connection of a pressure-sensitive resistance (Rs) and a fixed resistance (Rc), a resistance value of the pressure-sensitive resistance being variable in response to an applied pressure, and the determination portion calculates the load applied to the seat cushion based on a resistance value obtained from the plurality of pressure-sensitive portions and determines a seated status of the seat cushion based on the calculated load.

2. An occupant classification device comprising a pressure-sensitive sensor (10A) including a plurality of pressure-sensitive portions (6A) connected in series with each other and dispersedly arranged on a seat cushion (1), and a determination portion (20) for calculating number of pressure-sensitive switches (Rsw) operating **characterized in that** each pressure-sensitive portion is constituted by a parallel connection of the pressure-sensitive switch and a fixed resistance (Rcw), the pressure-sensitive switch being switched between a high resistance state and a low resistance state by an applied pressure, and the determination portion calculates the number of pressure-sensitive switches operating based on a resistance value obtained from the plurality of pressure-sensitive portions and determining a seated status of the seat cushion based on the calculated number of pressure-sensitive switches operating.

3. An occupant classification device comprising a first pressure-sensitive sensor (10) including a plurality of pressure-sensitive portions (6) connected in series with each other and dispersedly arranged on a seat cushion (1), and a determination portion (20) for calculating a load applied to the seat cushion and number of pressure-sensitive switches (Rsw) operating **characterized in that** each first pressure-sensitive portion is constituted by a parallel connection of a pressure-sensitive resistance (Rs) and a fixed resistance (Rc), a resistance value of the pressure-sensitive resistance being variable in response to an applied pressure, and the determination portion calculates a load applied to the seat cushion based on a resistance value obtained from the plurality of first pressure-sensitive portions and number of pressure-sensitive switches operating based on a resistance value obtained from the plurality of second pressure-sensitive portions, and determines a seated status of the seat cushion based on the calculated load and the calculated number of pressure-sensitive switches operating and **in that** the occupant classification device further comprises a second pressure-sensitive sensor (10A) including a plurality of second pressure-sensitive portions (6A) connected in series with each other and dispersedly arranged on the seat cushion, each second pressure-sensitive portion being constituted by a parallel connection of a pressure-sensitive switch (Rsw) and a fixed resistance (Rcw), the pressure-sensitive switch being switched between a high resistance state and a low resistance state by an applied pressure.

4. An occupant classification device according to claim 1, further comprising:
a pair of flexible insulator films (7a, 7b) facing each other with keeping a small distance therebetween and arranged on the seat cushion;
a pair of facing electrodes (8a, 8b) formed on an inner face of one of the pair of flexible insulator films by keeping a predetermined distance between the electrodes in a direction of a face of the insulator film so as to be positioned corresponding to each pressure-sensitive portion;
a resistive layer (9) constituting the fixed resistance and formed on a side of the pair of facing electrodes so as to connect the pair of facing electrodes with each other; and
a pressure-sensitive resistive layer (11) constituting the pressure-sensitive resistance and formed on the inner face of the other one of the pair of flexible insulator films so as to be positioned corresponding to the pair of facing electrodes.

5. An occupant classification device according to claim 2, further comprising:
a pair of flexible insulator films (7a, 7b) facing each other with keeping a small distance therebetween and arranged on the seat cushion;
a pair of facing electrodes (8a, 8b) formed on an inner face of one of the pair of flexible insulator films by keeping a predetermined distance between the electrodes in a direction of a face of the insulator film so as to be positioned corresponding to each pressure-sensitive portion;
a resistive layer (9A) constituting the fixed resistance and formed on a side of the pair of facing electrodes so as to connect the pair of facing electrodes with each other; and
a low resistive layer (11A) constituting the pressure-sensitive switch in the low resistance state and formed on the inner face of the other one of the pair of flexible insulator films so as to be positioned corresponding to the pair of facing electrodes.

6. An occupant classification device according to claim 3, further comprising:
a pair of flexible insulator films (7a, 7b) facing each other with keeping a small distance therebetween and arranged on the seat cushion;
a pair of first facing electrodes (8a, 8b) formed on an inner face of one of the pair of flexible insulator films by keeping a predetermined distance between the electrodes in a direction of a face of the insulator film so as to be positioned corresponding to each first pressure-sensitive portion;
a resistive layer (9) constituting the first fixed resistance and formed on a side of the pair of first facing electrodes so as to connect the pair of first facing electrodes with each other;
a pressure-sensitive resistive layer (11) constituting the pressure-sensitive resistance and formed on the inner face of the other one of the pair of flexible insulator films so as to be positioned corresponding to the pair of first facing electrodes;
a pair of second facing electrodes (8a, 8b) formed on an inner face of one of the pair of flexible insulator films by keeping a predetermined distance between the electrodes in a direction of a face of the insulator film so as to be positioned corresponding to each second pressure-sensitive portion;
a resistive layer (9A) constituting the second fixed resistance and formed on a side of the pair of second facing electrodes so as to connect the pair of second facing electrodes with each other; and
a low resistive layer (11A) constituting the pressure-sensitive switch in the low resistance state and formed on the inner face of the other one of the pair of flexible insulator films so as to be positioned corresponding to the pair of second facing electrodes.

7. An occupant classification device according to claim 1, wherein the resistance value of the pressure-sensitive resistance is decreased along with an increase of the pressure.

8. An occupant classification device according to claim 1, wherein the resistance value of the pressure-sensitive resistance is increased along with an increase of the pressure.

9. An occupant classification device according to claim 1, wherein the determination portion controls an airbag.

10. An occupant classification device according to claim 2, wherein the pressure-sensitive switch is switched from the high resistance state to the low resistance state due to the pressure applied.

11. An occupant classification device according to claim 2, wherein the pressure-sensitive switch is switched from the low resistance state to the high resistance state due to the pressure applied.

12. An occupant classification device according to claim 2, wherein the determination portion controls an airbag.

13. An occupant classification device according to claim 3, wherein the pressure-sensitive switch is switched from the high resistance state to the low resistance state due to the pressure applied.

14. An occupant classification device according to claim 3, wherein the pressure-sensitive switch is switched from the low resistance state to the high resistance state due to the pressure applied.

15. An occupant classification device according to claim 3, wherein the determination portion controls an airbag.
